# EUROPEAN PATENT APPLICATION

(11) **EP 3 318 140 A1**
(43) Date of publication of application: **09.05.2018**
(21) Application number: 16817165.0
(22) Date of filing: 17.06.2016
(51) Int. Cl.: A24F 47/00

(54) **POWER SUPPLY DEVICE, AEROSOL-GENERATING DEVICE, AND IDENTIFICATION CONTROL METHOD THEREOF**

(30) Priority: 02.07.2015 CN 201510381948; 02.07.2015 CN 201510381431
(71) Applicant: Changzhou Jwei Intelligent Technology Co., Ltd., Changzhou, Jiangsu 213125 (CN)
(72) Inventor: QIU, Weihua, Changzhou Jiangsu 213125 (CN)
(74) Representative: CMS Cameron McKenna Nabarro Olswang LLP
(86) International application number: PCT/CN2016/086298
(87) International publication number: WO 2017/000801

(57) **Abstract**

A power supply device comprising: an information collecting unit, controlled by a control unit, and configured to collect identification information of an identifying unit and transmit the collected identification information to an information processing unit; the information processing unit configured to decode the collected identification information from the information collecting unit, translate the decoded identification information to machine readable data information readable by the control unit, and transmit the machine readable data information to the control unit; the control unit configured to determine whether there is a set of standard identification information which matches the machine readable data information, and output a control signal according to a working mode of an atomizer corresponding to the set of standard identification information. An aerosol generating device and an identifying and controlling method for the aerosol generating device are further provided.

## Description

### FIELD

The subject matter relates to electronic cigarettes, and more particularly, to a power supply device, an aerosol generating device, and an identifying and controlling method for the aerosol generating device.

### BACKGROUND

Existing aerosol generating devices on the market usually comprise atomizers and power supply device connected to the atomizers. When an aerosol generating device is working, the power supply device supplies power to the atomizer, thereby causing the atomizer to heat aerosol-forming material to generating smoke, thus bringing a smoking experience to a user. However, since the type and/or model of the atomizer may be different, the working mode of the atomizer may also be different. The user needs to first operate and get to know the properties of the atomizer, for example, whether the atomizer has a temperature controlling function, the way of the atomizer achieving temperature control, the type and/or model of a heat generating element of the atomizer, before the user determines the working mode of the atomizer. The operation process may be cumbersome which decreases the user experience when the user uses the aerosol generating device.

### SUMMARY

What is needed, is a power supply device, an aerosol generating device, and an identifying and controlling method for the aerosol generating device.

To achieve that purpose, the present disclosure provides a power supply device comprising: an information collecting unit, controlled by a control unit, and configured to collect identification information of an identifying unit and transmit the collected identification information to an information processing unit; the information processing unit configured to decode the collected identification information from the information collecting unit, translate the decoded identification information to machine readable data information readable by the control unit, and transmit the machine readable data information to the control unit; the control unit configured to determine whether there is a set of standard identification information which matches the machine readable data information, and output a control signal according to a working mode of an atomizer corresponding to the set of standard identification information.

Furthermore, the power supply device further comprises a storing unit electrically connected to the control unit. The storing unit stores data information comprising at least one set of standard identification information, and software comprising at least one working mode corresponding to the set of standard identification information.

Furthermore, the power supply device further comprises a display unit electrically connected to the control unit. The display unit is configured to display content comprising menu of an aerosol generating device, indication and/or warning for operating the aerosol generating device, working modes, working parameters of the aerosol generating device, or any combination thereof.

Furthermore, the power supply device further comprises a user input unit electrically connected to the control unit. The user input unit is configured to generate input signals in response to operations to the displayed content on the display unit and transmit the input signals to the control unit.

Furthermore, the power supply device further comprises a transmission interface unit. The transmission interface unit is connected to an other equipment via a wireless/wired port, and is configured to introduce data information and/or software from the other equipment into the storing unit for updating and/or enriching the storing unit, or to introduce the data information and/or software from the storing unit into the other equipment, for use and analysis by the other equipment, and/or the transmission interface unit is connected to an other equipment via a wireless port /wired port, to allow the control unit to obtain at least one set of standard identification information and at least one working mode corresponding to the set of standard identification information in real-time from the other equipment.

Furthermore, the identifying unit is configured to indicate the identification information. The identification information indicated by the identifying unit comprises code of working mode of the atomizer, type and/or model, manufacturer and/or wholesaler, batch number, production date, and service life of the atomizer, type and/or model of aerosol-forming material capable of being atomized by the atomizer, type and/or model of a heat generating element of the atomizer, type and/or model of a temperature sensing element of the atomizer, or any combination thereof.

Furthermore, the identifying unit is positioned on the atomizer, package/specification of the atomizer/aerosol generating device/aerosol-forming material, or card/sales website/electronic document corresponding to the atomizer/ aerosol generating device/aerosol-forming material.

Furthermore, the identifying unit is in a formed of pattern, character, number, letter, one-dimensional bar code, two-dimensional bar code, three-dimensional bar code, magnetic tag, electronic tag, or any combination thereof.

Furthermore, the identifying unit is formed by printing, surface treatment, gluing, inlaying, editing, or any combination thereof.

An aerosol generating device comprises an atomizer for atomizing aerosol-forming material and the above power supply device.

The present disclosure further provides an identifying and controlling method for an aerosol generating device comprising an atomizer and a power supply device. The power supply device comprises an information collecting unit, an information processing unit, and a control unit. The identifying and controlling method comprises: the information collecting unit, controlled by the control unit, collecting identification information of an identifying unit and transmitting the collected identification information to the information processing unit; the information processing unit decoding the collected identification information from the information collecting unit, translating the decoded identification information to machine readable data information readable by the control unit, and transmitting the machine readable data information to the control unit; the control unit determining whether there is a set of standard identification information matching the machine readable data information; the control unit outputting a control signal according to a working mode of the atomizer corresponding to the set of standard identification information; the control unit reminding a user that the atomizer connected to the power supply device does not match the power supply device when no set of standard identification information matches the machine readable data information.

Furthermore, the control unit outputting a control signal according to a working mode of the atomizer corresponding to the set of standard identification information further comprises: when there is only one working mode corresponding to the set of standard identification information, the control unit controlling the aerosol generating device to work under the corresponding working mode; when there are at least two working modes corresponding to the set of standard identification information, the control unit determining whether a default working mode exists.

Furthermore, the control unit determining whether a default working mode exists further comprises: the user selecting whether to use the default working mode when the default working mode exists; the user selecting a working mode and the control unit controlling the aerosol generating device to work under the selected working mode when no default working mode exists.

Furthermore, the user selecting whether to use the default working mode further comprises: the control unit controlling the aerosol generating device to work under the default working mode when the user selects to use the default working mode; the user selecting a working mode and the control unit controlling the aerosol generating device to work under the selected working mode when the user selects not to use the default working mode.

Furthermore, the control unit controlling the aerosol generating device to work under the corresponding working mode, the default working mode, or the selected working mode further comprising: when working parameters for the corresponding working mode, the default working mode, or the selected working mode are constant and non-adjustable, the control unit controlling the aerosol generating device to work under the corresponding working mode, the default working mode, or the selected working mode based on the constant working parameters; when at least one working parameter for the corresponding working mode, the default working mode, or the selected working mode is adjustable, the controlling device determining whether default working parameters exist.

Furthermore, the control unit determining whether default working parameters exist further comprises: the user selecting whether to use the default working parameters when the default working parameters exist; the user setting working parameters and the control unit controlling the aerosol generating device to work under the corresponding working mode, the default working mode, or the selected working mode based on the set working parameters when no default working parameters exist.

Furthermore, the user selecting whether to use the default working parameters further comprises: the control unit controlling the aerosol generating device to work under the corresponding working mode, the default working mode, or the selected working mode based on the default working parameters when the user selects to use the default working parameters; the user setting working parameters and the control unit controlling the aerosol generating device to work under the corresponding working mode, the default working mode, or the selected working mode based on the set working parameters when the user selects not to use the default working parameters.

The present disclosure further provides an aerosol generating device configured to perform the above identifying and controlling method.

The present disclosure has the following advantages.
(1) The power supply device obtains the identification information through the identifying unit, and can quickly call the corresponding working mode of the atomizer according to the identification information. The user therefore does not need to operate the atomizer to get to know the properties of the atomizer, for example, whether the atomizer has a temperature controlling function, the way of the atomizer achieving temperature control, the type and/or model of the heat generating element of the atomizer, before the user determines the working mode of the atomizer. The likelihood of operating the aerosol generating device in an improper working mode, which may cause damage to the user or the aerosol generating device, is reduced. Misunderstandings as to the detail information of the atomizer are also less likely. As such, the safety in operation is improved.
(2) The power supply device only supplies certain power to an atomizer matching the power supply device, thereby improving the safety in operation. The power supply device cooperatively works with a matching atomizer, thereby improving the working efficiency and increasing the service life of the power supply device and the atomizer.
(3) The user can set preferences for using the atomizer as default which are stored in the storing unit. When the user uses the atomizer or another same-model atomizer later, the user can recall the default working mode and/or the default working parameters from the storing unit, thereby improving the user experience.
(4) The transmission interface unit can be connected to other equipment via a wireless/wired port, and introduce data information and/or software from the other equipment into the storing unit for updating and/or enriching the storing unit. This is advantageous to update the power supply device.
(5) The transmission interface unit can be connected to other equipment via a wireless/wired port, and introduce data information and/or software from the storing unit into the other equipment, for use and analysis by the other equipment. This is advantageous when changing to another atomizer and/or power supply device, and allows the manufacturer to collect and analyze user preferences and to data as to the authenticity and performance of their own goods.
(6) The transmission interface unit can be connected to other equipment via a wireless/wired port, thereby allowing the control unit to obtain at least one set of standard identification information and at least one working mode corresponding to the set of standard identification information in real-time from the other equipment. Thus, the storing unit can be omitted from the aerosol generating device which can simplify structure and save space of the aerosol generating device.

### BRIEF DESCRIPTION OF THE DRAWINGS

FIG. 1 is a block diagram of an aerosol generating device.
FIG. 2 is a flowchart of a first embodiment of an identifying and controlling method for an aerosol generating device.
FIG. 3 is a flowchart of a second embodiment of an identifying and controlling method for an aerosol generating device.
FIG. 4 is a flowchart of a third embodiment of an identifying and controlling method for an aerosol generating device.
FIG. 5 is a flowchart of a fourth embodiment of an identifying and controlling method for an aerosol generating device.

| | |
|---|---|
| Aerosol generating device 100 | Control unit 133 |
| Atomizer 110 | Storing unit 134 |
| Identifying unit 120 | Power supply module 135 |
| Power supply device 130 | Display unit 136 |
| Information collecting unit 131 | User input unit 137 |
| Information processing unit 132 | Transmission interface unit 138 |

### DETAILED DESCRIPTION

The present disclosure, including the accompanying drawings, is illustrated by way of examples and not by way of limitation. It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

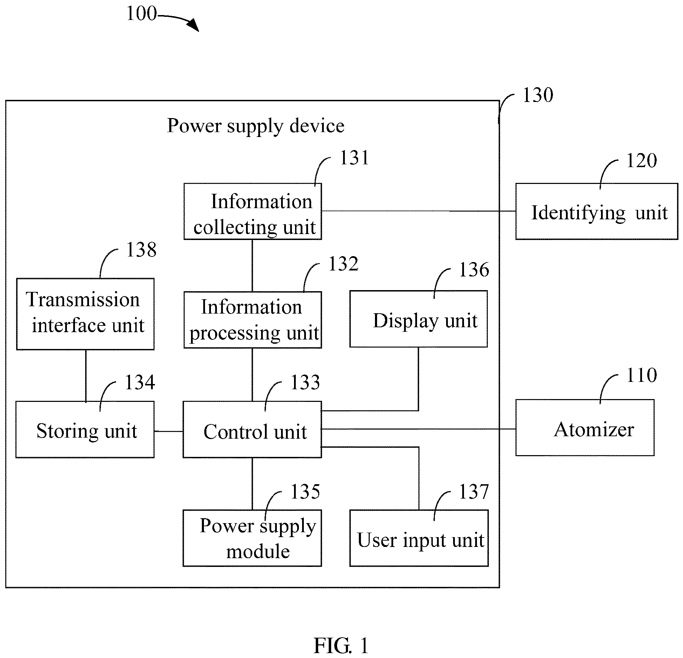

FIG. 1 illustrates an aerosol generating device. The elements comprised in the aerosol generating device 100 are not drawn to scale, and some irrelevant elements are omitted for simplicity.

The aerosol generating device 100 comprises an atomizer 110 and a power supply device 130. The atomizer 110 atomizes aerosol-forming material. The power supply device 130 is electrically connected to and supplies power to the atomizer 110. The power supply device 130 further collects, translates, analyzes, processes and stores identification information indicated by an identifying unit 120, and controls the aerosol generating device 100 to run normally.

The identifying unit 120 indicates the identification information.

The identification information indicated by the identifying unit 120 comprises code of the working mode of the atomizer 110, type and/or model, manufacturer and/or wholesaler, batch number, production date, and service life of the atomizer 110, type and/or model of the aerosol-forming material capable of being atomized by the atomizer 110, type and/or model of a heat generating element of the atomizer 110, type and/or model of a temperature sensing element of the atomizer 110, or any combination thereof. The code of the working mode of the atomizer 110 is in a form of pattern, character, number, letter, or any combination thereof. One code represents one working mode of the atomizer 110. The identifying unit 120 is positioned on the atomizer 110, package/specification of the atomizer110/aerosol generating device 100/aerosol-forming material, or card/sales website/electronic document corresponding to the atomizer 110/aerosol generating device 100/aerosol-forming material.

The identifying unit 120 is in a formed of pattern, character, number, letter, one-dimensional bar code, two-dimensional bar code, three-dimensional bar code, magnetic tag, electronic tag, or any combination thereof.

The identifying unit 120 is formed by a printing, surface treatment, gluing, inlaying, editing, or any combination thereof. The printing can be performed by ink and/or carbon dust. The surface treatment can be performed on surface of the atomizer 110, the package of the atomizer110/aerosol generating device 100/aerosol-forming material, at least one page of the specification of the atomizer110/aerosol generating device 100/aerosol-forming material, or the card according to the atomizer 110/aerosol generating device 100/aerosol-forming material, to form recesses, protrusions, and/or cutouts.

The power supply device 130 can comprise an information collecting unit, 131, an information processing unit 132, a control unit 133, a storing unit 134, and a power supply module 135. The information processing unit 132, the storing unit 134, and the power supply module 135 are electrically connected to the control unit 133. The information processing unit 132 is further electrically connected to the information collecting unit 131. The control unit 133 is further electrically connected to the atomizer 110.

The information collecting unit 131, controlled by the control unit 133, collects the identification information of the identifying unit 120 and transmits the collected identification information to the information processing unit 132. The identification information can be collected by scanning, be received through a wireless/wired port, or as user input.

The information processing unit 132 decodes the collected identification information from the information collecting unit 131, translates the decoded identification information to machine readable data information readable by the control unit 133, and transmits the machine readable data information to the control unit 133.

The control unit 133 controls the power supply device 130 to work, coordinates all modules of the power supply device 130 to work with each other, and controls the aerosol generating device 100 to run normally. The control unit 133 further determines whether there is a set of standard identification information matching the machine readable data information, and outputs a control signal according to a working mode of the atomizer 110 corresponding to the set of standard identification information. The storing unit 134 stores data information and/or software. The data information can be the machine readable data information translated by the information processing unit 132, and also can be the standard identification information of the atomizer 110. The software can be the working mode of the atomizer 110 corresponding to the set of standard identification information. In this embodiment, the storing unit 134 pre-stores at least one set of standard identification information and at least one working mode of the atomizer 110 corresponding to the set of standard identification information. The working mode comprises a temperature controlling mode and a voltage/power controlling mode. The temperature controlling mode can be divided into four types, according to different ways to achieve temperature control. The first type of the temperature controlling mode is calculating the temperature of the heat generating element by detecting relevant physical values of the temperature sensing element, and adjusting output voltage/output power according to the calculated temperature, thereby achieving temperature control. The second type of the temperature controlling mode is connecting the power supply device to or disconnecting the power supply device to the atomizer through a temperature switch, thereby achieving temperature control. The third type of the temperature controlling mode is determining the temperature of the heat generating element by detecting actions of the temperature switch, and adjusting output voltage/output power according to the determined temperature, thereby achieving temperature control. The fourth type of the temperature controlling mode is calculating the temperature of the heat generating element having temperature coefficient of resistance characteristics by detecting a resistance value of the heat generating element, and adjusting output voltage/output power according to the calculated temperature, thereby achieving temperature control. Such four ways to achieve temperature control are known in the art, such as the subject matter of CN Patent Application Publication No. 201510054274.3, 201520072802.3, 201510059426.9, 201520072776.4, 201510059433.9, 201520073371.2, and 201510054625.0.

The power supply module 135 supplies power to the atomizer 110.

Furthermore, the power supply device 130 further comprises a display unit 136 electrically connected to the control unit 133. The display unit 136 displays content comprising menu of the aerosol generating device 100, indication/warning for operating the aerosol generating device 100, the working modes of the aerosol generating device 100, the working parameters of the aerosol generating device 100, or any combination thereof, thereby indicating to the user a working state of the aerosol generating device 100.

In other embodiments, the display unit 136 can be replaced by at least one indicating lamp. The indicating lamp can indicate the content comprising menu of the aerosol generating device 100, indication/warning for operating the aerosol generating device 100, the working modes of the aerosol generating device 100, the working parameters of the aerosol generating device 100, or any combination thereof, through pattern, character, number, or letter formed by the one or more indicating lamps, different colors of the indicating lamps, different numbers of the indicating lamps which are turned on/off, or any combination thereof, thereby indicating to the user the working state of the aerosol generating device 100.

In other embodiments, the display unit 136 can be replaced by a voice unit which audibly indicates the content comprising menu of the aerosol generating device 100, indication/warning for operating the aerosol generating device 100, the working modes of the aerosol generating device 100, the working parameters of the aerosol generating device 100, or any combination thereof, thereby indicating to the user the working state of the aerosol generating device 100.

Furthermore, the power supply device 130 further comprises a user input unit 137 electrically connected to the control unit 133. The user input unit 137 generates input signals in response to operations to the displayed content on the display unit 136, and transmits the input signals to the control unit 133. In this embodiment, the user input unit 137 is for the user to select the working mode, switch between the working modes, set the working parameters, and confirm control commands. The working parameters comprise output voltage/output power of the power supply module 135, working temperature of the atomizer 110, working duration of the atomizer 110, and puff number of the aerosol generating device 100, or any combination thereof.

Furthermore, when at least two working modes correspond to the set of standard identification information which matches the identification information of the atomizer 110, and/or when at least one working parameter is user-adjustable for the working mode corresponding to the set of standard identification information, the user may have preferences for the working mode and/or the working parameters. Then, the user can select the working mode and/or set the working parameters according to his or her preferences through the user input unit 137 as default values which is stored in the storing unit 134. When the user uses the atomizer 110 or another same-model atomizer later, the user can recall the default working mode and/or working parameters from the storing unit 134. For example, the user can select the temperature controlling mode among some user-adjustable working modes and the working temperature of 300 degrees Celsius among some user-adjustable working parameters as default values and store them in the storing unit 134. When the user uses the atomizer 110 or another same-model atomizer later, if the user selects the default working mode and default working parameters, the atomizer 110 or another same-model atomizer instantly works under the temperature controlling mode and the working temperature of 300 degrees Celsius, thereby saving setup time and improving the user experience.

In other embodiments, the default working mode and/or working parameters can be provided by the manufacturer and pre-stored in the storing unit 134. The user can personally change the default working mode and/or working parameters provided by the manufacturer.

The power supply device 130 further comprises a transmission interface unit 138 electrically connected to the storing unit 134. The transmission interface unit 138 is connected to other equipment via a wireless/wired port, and introduces the data information and/or software from the other equipment into the storing unit 134 for updating and/or enriching the storing unit 134, or introduces the data information and/or software from the storing unit 134 into the other equipment, for use and analysis by the other equipment. The other equipment comprises another power supply device, computer, special data analyzing and processing equipment, service system provided by the manufacturer, or any combination thereof.

In other embodiments, the storing unit 134 is omitted from the power supply device 130. The transmission interface unit 138 is electrically connected to the control unit 133. The at least one set of standard identification information and at least one working mode corresponding to the set of standard identification information are stored in the other equipment. The transmission interface unit 138 is connected to other equipment via a wireless /wired port, thereby allowing the control unit 133 to obtain the at least one set of standard identification information and the at least one working mode corresponding to the set of standard identification information in real-time from the other equipment.

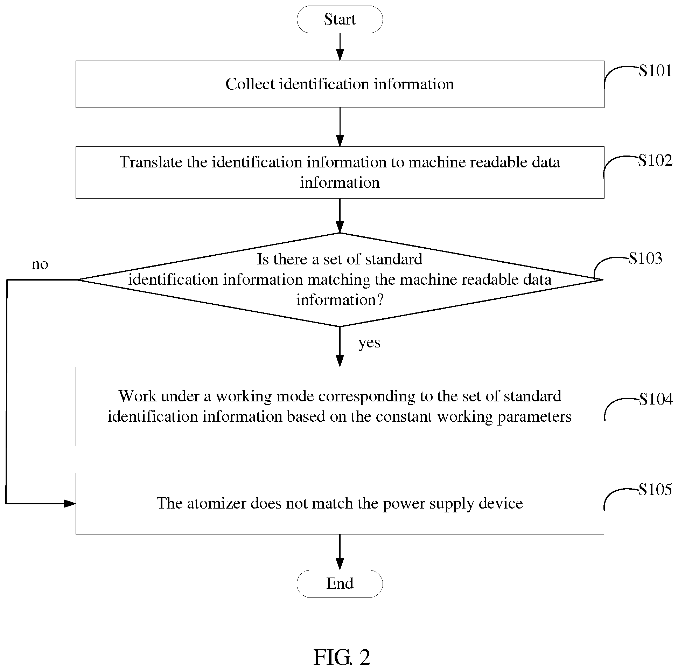

FIG. 2 illustrates the identifying and controlling method for the aerosol generating device 100, in a situation where the storing unit 134 or other equipment stores at least one set of standard identification information, only one working mode corresponds to each set of standard identification information, and the working parameters for each working mode are constant and non-adjustable.

At step S101, the information collecting unit 131, controlled by the control unit 133, collects identification information of the identifying unit 120, and transmits the collected identification information to the information processing unit 132. Then the procedure goes to step S102.

Step S102, the information processing unit 132 decodes the collected identification information from the information collecting unit 131, translates the decoded identification information to machine readable data information readable by the control unit 133, and transmits the machine readable data information to the control unit 133. Then the procedure goes to step S103.

Step S103, the control unit 133 determines whether there is a set of standard identification information matching the machine readable data information. If yes, the procedure goes to step S104, otherwise the procedure goes to step S105.

Step S104, the control unit 133 controls the aerosol generating device 100 to work under the working mode corresponding to the set of standard identification information based on the constant working parameters.

Step S105, the control unit 133 reminds the user that the atomizer 110 connected to the power supply device 130 does not match the power supply device 130.

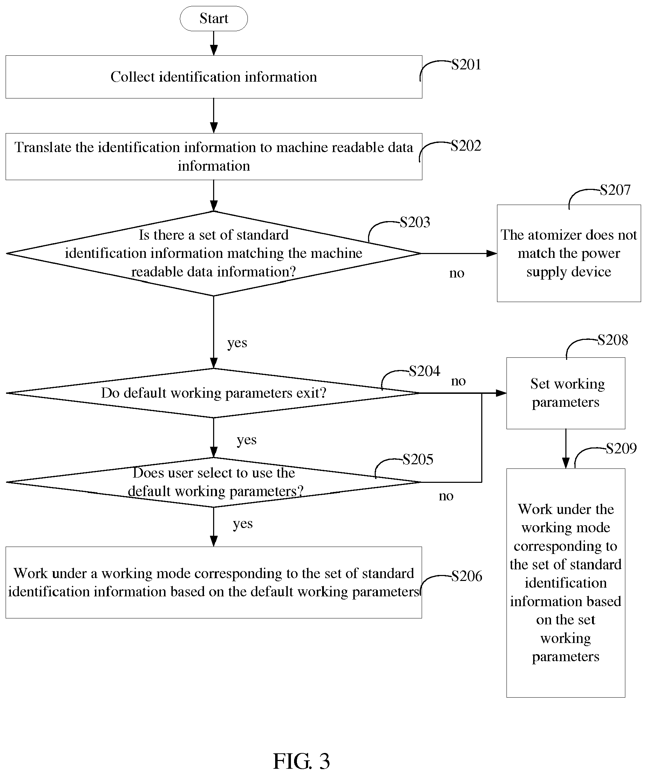

FIG. 3 illustrates the identifying and controlling method for the aerosol generating device 100, in a situation where the storing unit 134 or other equipment stores at least one set of standard identification information, only one working mode corresponds to each set of standard identification information, and at least one working parameter for each working mode is adjustable:

At step S201, the information collecting unit 131, controlled by the control unit 133, collects identification information of the identifying unit 120, and transmits the collected identification information to the information processing unit 132. Then the procedure goes to step S202.

Step S202, the information processing unit 132 decodes the collected identification information from the information collecting unit 131, translates the decoded identification information to machine readable data information readable by the control unit 133, and transmits the machine readable data information to the control unit 133. Then the procedure goes to step S203.

Step S203, the control unit 133 determines whether there is a set of standard identification information matching the machine readable data information. If yes, the procedure goes to step S204, otherwise the procedure goes to step S207.

Step S204, the control unit 133 determines whether default working parameters exist. If yes, the procedure goes to step S205, otherwise the procedure goes to step S208.

Step S205, the user selects whether to use the default working parameters. If yes, the procedure goes to step S206; otherwise, the procedure goes to step S208.

Step S206, the control unit 133 controls the aerosol generating device 100 to work under the working mode corresponding to the set of standard identification information based on the default working parameters.

Step S207, the control unit 133 reminds the user that the atomizer 110 connected to the power supply device 130 does not match the power supply device 130.

Step S208, the user sets the working parameters. Then the procedure goes to step S209.

Step S209, the control unit 133 controls the aerosol generating device 100 to work under the working mode corresponding to the set of standard identification information based on the set working parameters.

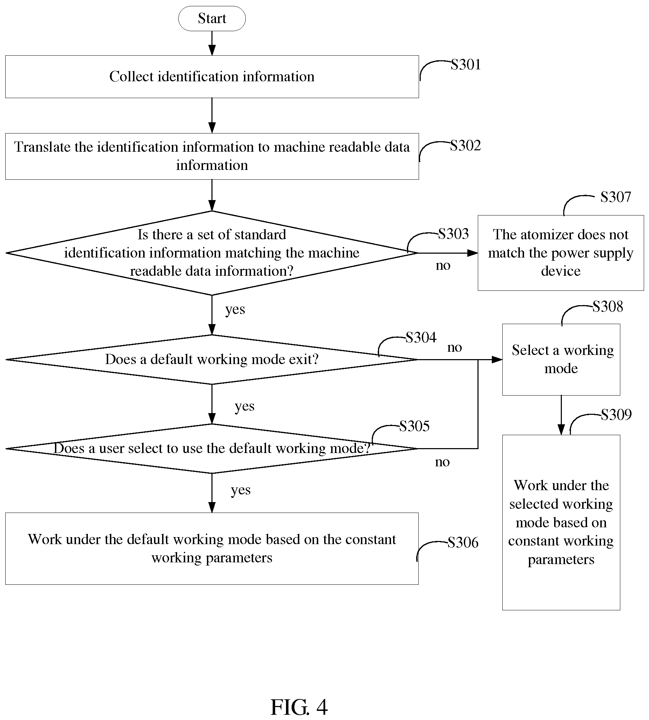

FIG. 4 illustrates that the identifying and controlling method for the aerosol generating device 100, in a situation the storing unit 134 or other equipment stores at least one set of standard identification information, at least two working modes correspond to each set of standard identification information, and the working parameters for each working mode are constant and non-adjustable.

At step S301, the information collecting unit 131, controlled by the control unit 133, collects identification information of the identifying unit 120, and transmits the collected identification information to the information processing unit 132. Then the procedure goes to step S302.

Step S302, the information processing unit 132 decodes the collected identification information from the information collecting unit 131, translates the decoded identification information to machine readable data information readable by the control unit 133, and transmits the machine readable data information to the control unit 133. Then the procedure goes to step S303.

Step S303, the control unit 133 determines whether there is a set of standard identification information matching the machine readable data information. If yes, the procedure goes to step S304, otherwise the procedure goes to step S307.

Step S304, the control unit 133 determines whether a default working mode exists. If yes, the procedure goes to step S305, otherwise procedure goes to step S308.

Step S305, the user selects whether to use the default working mode. If yes, the procedure goes to step S306, otherwise procedure goes to step S308.

Step S306, the control unit 133 controls the aerosol generating device 100 to work under the default working mode based on the constant working parameters.

Step S307, the control unit 133 reminds the user that the atomizer 110 connected to the power supply device 130 does not match the power supply device 130.

Step S308, the user selects a working mode. Then the procedure goes to step S309.

Step S309, the control unit 1333 controls the aerosol generating device 100 to work under the selected working mode based on the constant working parameters.

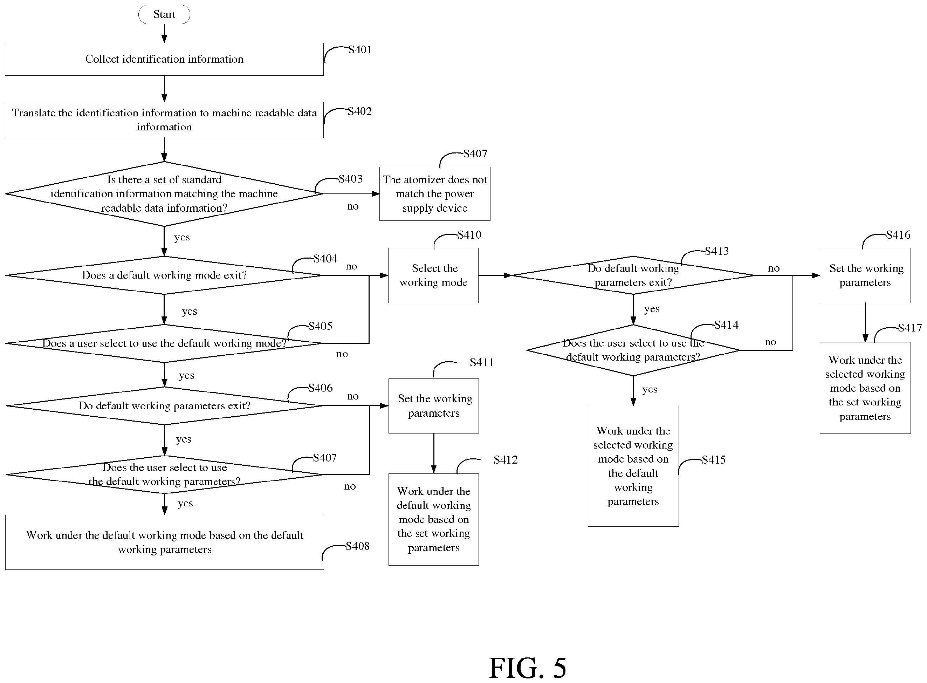

FIG. 5 illustrates the identifying and controlling method for the aerosol generating device 100, in a situation the storing unit 134 or other equipment stores at least one set of standard identification information, at least two working modes corresponds to each set of standard identification information, and at least one working parameter for each working mode is adjustable.

At step S401, the information collecting unit 131, controlled by the control unit 133, collects identification information of the identifying unit 120, and transmits the collected identification information to the information processing unit 132. Then, the procedure goes to step S402.

Step S402, the information processing unit 132 decodes the collected identification information from the information collecting unit 131, translates the decoded identification information to machine readable data information readable by the control unit 133, and transmits the machine readable data information to the control unit 133. Then the procedure goes to step S403.

Step S403, the control unit 133 determines whether there is a set of standard identification information matching the machine readable data information. If yes, the procedure goes to step S404, otherwise the procedure goes to step S409.

Step S404, the control unit 133 determines whether a default working mode exists. If yes, the procedure goes to step S405; otherwise, the procedure goes to step S410.

Step S405, the user selects whether to use the default working mode. If yes, the procedure goes to step S406, otherwise the procedure goes to step S410.

Step S406, the control unit 133 determines whether default working parameters for the default working mode exist. If yes, the procedure goes to step S407, otherwise the procedure goes to step S411.

Step S407, the user selects whether to use the default working parameters for the default working mode. If yes, the procedure goes to step S408, otherwise, the procedure goes to step S411.

Step S408, the control unit 133 controls the aerosol generating device 100 to work under the default working mode based on the default working parameters.

Step S409, the control unit 133 reminds the user that the atomizer 110 connected to the power supply device 130 does not match the power supply device 130.

Step S410, the user selects a working mode. Then the procedure goes to step S413.

Step S411, the user sets the working parameters for the default working mode. Then the procedure goes to step S412.

Step S412, the control unit 133 controls the aerosol generating device 100 to work under the default working mode based on the set working parameters.

Step S413, the control unit 133 determines whether default working parameters exist for the selected working mode. If yes, the procedure goes to step S414, otherwise the procedure goes to step S416.

Step S414, the user selects whether to use the default working parameters for the selected working mode. If yes, the procedure goes to step S415, otherwise the procedure goes to step S416.

Step S415, the control unit 133 controls the aerosol generating device 100 to work under the selected working mode based on the default working parameters.

Step S416, the user sets working parameters for the selected working mode. Then the procedure goes to step S417.

Step S417, the control unit 133 controls the aerosol generating device 100 to work under the selected working mode based on the set working parameters.

In other embodiments, when the storing unit 134 or other equipment stores at least one set of standard identification information, at least one working mode corresponds to each set of standard identification information, the working parameters for a portion of the working modes are constant and non-adjustable, and at least one working parameter for the other portion of the working modes is adjustable, the identifying and controlling method for the aerosol generating device 100 can be combined by and/or modified according to the identifying and controlling method, or elements of them, of the above embodiments.

The aerosol generating device 100 has the following advantages.
(1) The power supply device 130 obtains the identification information through the identifying unit 120, and can quickly call the corresponding working mode of the atomizer 110 according to the identification information. The user therefore does not need to operate the atomizer 110 to get to know the properties of the atomizer 110, for example, whether the atomizer 110 has a temperature controlling function, the way of the atomizer achieving temperature control, the type and/or model of the heat generating element of the atomizer 110, before the user determines the working mode of the atomizer 110. The likelihood of operating the aerosol generating device 100 in an improper working mode, which may cause damage to the user or the aerosol generating device 100, is reduced. Misunderstandings as to the detail information of the atomizer 110 are also less likely. As such, the safety in operation is improved.
(2) The power supply device 130 only supplies certain power to an atomizer 110 matching the power supply device 130, thereby improving the safety in operation. The power supply device 130 cooperatively works with a matching atomizer 110, thereby improving the working efficiency and increasing the service life of the power supply device 130 and the atomizer 110.
(3) The user can set preferences for using the atomizer 110 as default which are stored in the storing unit 134. When the user uses the atomizer 110 or another same-model atomizer later, the user can recall the default working mode and/or the default working parameters from the storing unit 134, thereby improving the user experience.
(4) The transmission interface unit 138 can be connected to other equipment via a wireless/wired port, and introduce data information and/or software from the other equipment into the storing unit 134 for updating and/or enriching the storing unit 134. This is advantageous to update the power supply device 130.
(5) The transmission interface unit 138 can be connected to other equipment via a wireless/wired port, and introduce data information and/or software from the storing unit 134 into the other equipment, for use and analysis by the other equipment. This is advantageous when changing to another atomizer 110 and/or power supply device 130, and allows the manufacturer to collect and analyze user preferences and data as to the authenticity and performance of their own goods.
(6) The transmission interface unit 138 can be connected to other equipment via a wireless/wired port, thereby allowing the control unit 133 to obtain at least one set of standard identification information and at least one working mode corresponding to the set of standard identification information, in real-time from the other equipment. Thus, the storing unit 134 can be omitted from the aerosol generating device 100 which can simplify structure and save space of the aerosol generating device 100.

## Claims

1. A power supply device comprising:
an information collecting unit, controlled by a control unit, and configured to collect identification information of an identifying unit and transmit the collected identification information to an information processing unit;
an the information processing unit configured to decode the collected identification information from the information collecting unit, translate the decoded identification information to machine readable data information readable by the control unit, and transmit the machine readable data information to the control unit;
the control unit configured to determine whether there is a set of standard identification information which matches the machine readable data information, and output a control signal according to a working mode of an atomizer corresponding to the set of standard identification information.

2. The power supply device of claim 1, further comprising a storing unit electrically connected to the control unit, wherein the storing unit stores data information comprising at least one set of standard identification information, and software comprising at least one working mode corresponding to the set of standard identification information.

3. The power supply device of claim 1, further comprising a display unit electrically connected to the control unit, wherein the display unit is configured to display content comprising menu of an aerosol generating device, indication and/or warning for operating the aerosol generating device, working modes, working parameters of the aerosol generating device, or any combination thereof.

4. The power supply device of claim 3, further comprising a user input unit electrically connected to the control unit, wherein the user input unit is configured to generate input signals in response to operations to the displayed content on the display unit and transmit the input signals to the control unit.

5. The power supply device of claim 2, further comprising a transmission interface unit, wherein the transmission interface unit is connected to an other equipment via a wireless/wired port, and is configured to introduce data information and/or software from the other equipment into the storing unit for updating and/or enriching the storing unit, or to introduce the data information and/or software from the storing unit into the other equipment, for use and analysis by the other equipment, and/or the transmission interface unit is connected to another equipment via a wireless port /wired port, to allow the control unit to obtain at least one set of standard identification information and at least one working mode corresponding to the set of standard identification information in real-time from the other equipment.

6. The power supply device of claim 1, wherein the identifying unit is configured to indicate the identification information, the identification information indicated by the identifying unit comprises code of working mode of the atomizer, type and/or model, manufacturer and/or wholesaler, batch number, production date, and service life of the atomizer, type and/or model of aerosol-forming material capable of being atomized by the atomizer, type and/or model of a heat generating element of the atomizer, type and/or model of a temperature sensing element of the atomizer, or any combination thereof.

7. The power supply device of claim 1, wherein the identifying unit is positioned on the atomizer, package/specification of the atomizer/aerosol generating device/aerosol-forming material, or card/sales website/electronic document corresponding to the atomizer/ aerosol generating device/aerosol-forming material.

8. The power supply device of claim 6, wherein the identifying unit is in a formed of pattern, character, number, letter, one-dimensional bar code, two-dimensional bar code, three-dimensional bar code, magnetic tag, electronic tag, or any combination thereof.

9. The power supply device of claim 8, wherein the identifying unit is formed by printing, surface treatment, gluing, inlaying, editing, or any combination thereof.

10. An aerosol generating device comprising an atomizer for atomizing aerosol-forming material and a power supply device of any of the claims 1-9.

11. An identifying and controlling method for an aerosol generating device comprising an atomizer and a power supply device, the power supply device comprising an information collecting unit, an information processing unit, and a control unit, the identifying and controlling method comprising:
the information collecting unit, controlled by the control unit, collecting identification information of an identifying unit and transmitting the collected identification information to the information processing unit;
the information processing unit decoding the collected identification information from the information collecting unit, translating the decoded identification information to machine readable data information readable by the control unit, and transmitting the machine readable data information to the control unit;
the control unit determining whether there is a set of standard identification information matching the machine readable data information;
the control unit outputting a control signal according to a working mode of the atomizer corresponding to the set of standard identification information; and
the control unit reminding a user that the atomizer connected to the power supply device does not match the power supply device when no set of standard identification information matches the machine readable data information.

12. The identifying and controlling method of claim 11, wherein the control unit outputting a control signal according to a working mode of the atomizer corresponding to the set of standard identification information further comprises:
when there is only one working mode corresponding to the set of standard identification information, the control unit controlling the aerosol generating device to work under the corresponding working mode;
when there are at least two working modes corresponding to the set of standard identification information, the control unit determining whether a default working mode exists.

13. The identifying and controlling method of claim 12, wherein the control unit determining whether a default working mode exists further comprises:
the user selecting whether to use the default working mode when the default working mode exists;
the user selecting a working mode and the control unit controlling the aerosol generating device to work under the selected working mode when no default working mode exists.

14. The identifying and controlling method of claim 13, wherein the user selecting whether to use the default working mode further comprises:
the control unit controlling the aerosol generating device to work under the default working mode when the user selects to use the default working mode;
the user selecting a working mode and the control unit controlling the aerosol generating device to work under the selected working mode when the user selects not to use the default working mode.

15. The identifying and controlling method of claim 12, 13 or 14, wherein the control unit controlling the aerosol generating device to work under the corresponding working mode, the default working mode, or the selected working mode further comprises:
when working parameters for the corresponding working mode, the default working mode, or the selected working mode are constant, the control unit controlling the aerosol generating device to work under the corresponding working mode, the default working mode, or the selected working mode based on the constant working parameters;
when at least one working parameter for the corresponding working mode, the default working mode, or the selected working mode is adjustable, the controlling unit determining whether default working parameters exist.

16. The identifying and controlling method of claim 15, wherein the control unit determining whether default working parameters exist further comprises:
the user selecting whether to use the default working parameters when the default working parameters exist;
the user setting working parameters and the control unit controlling the aerosol generating device to work under the corresponding working mode, the default working mode, or the selected working mode based on the set working parameters when no default working parameters exist.

17. The identifying and controlling method of claim 16, wherein the user selecting whether to use the default working parameters further comprises:
the control unit controlling the aerosol generating device to work under the corresponding working mode, the default working mode, or the selected working mode based on the default working parameters when the user selects to use the default working parameters;
the user setting working parameters and the control unit controlling the aerosol generating device to work under the corresponding working mode, the default working mode, or the selected working mode based on the set working parameters when the user selects not to use the default working parameters.

18. An aerosol generating device configured to perform the identifying and controlling method of any of the claims 11-17.
